(19) Europäisches Patentamt
European Patent Office
Office européen des brevets

(11) EP 2 852 645 B1

# (12) EUROPEAN PATENT SPECIFICATION

(45) Date of publication and mention of the grant of the patent:
**13.04.2016 Bulletin 2016/15**

(21) Application number: **12724938.1**

(22) Date of filing: **23.05.2012**

(51) Int Cl.:
***C09J 4/00*** $^{(2006.01)}$ ***C09J 4/06*** $^{(2006.01)}$
***C09J 5/02*** $^{(2006.01)}$ ***C09J 133/00*** $^{(2006.01)}$

(86) International application number:
**PCT/EP2012/059632**

(87) International publication number:
**WO 2013/174431 (28.11.2013 Gazette 2013/48)**

## (54) A CURABLE COMPOSITION COMPRISING CYANOACRYLATE MONOMERS

HÄRTBARE ZUSAMMENSETZUNG ENTHALTEND CYANOACRYLATMONOMERE

COMPOSITION DURCISSABLE CONTENANT DES MONOMÈRES CYANOACRYLATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2015 Bulletin 2015/14**

(73) Proprietors:
- **Henkel AG & Co. KGaA**
  **40589 Düsseldorf (DE)**
- **Henkel IP & Holding GmbH**
  **40589 Düsseldorf (DE)**

(72) Inventors:
- **MCARDLE, Ciaran**
  **Dublin 18 (IE)**
- **XIAO, Edward Schude**
  **40589 Dusseldorf (DE)**
- **VAN WIJK, Kerstin**
  **40211 Düsseldorf (DE)**
- **ZHAO, Ligang**
  **40593 Düsseldorf (DE)**
- **SCHNEIDER, Anja**
  **40547 Düsseldorf (DE)**
- **ANDER, Hansjoerg**
  **56170 Bendorf (DE)**
- **PETRICK, Patricia**
  **56355 Oberbachheim (DE)**
- **DOMANSKI, Reinhold**
  **56566 Neuwied (DE)**

(56) References cited:
**EP-A2- 2 154 214**

EP 2 852 645 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a curable composition, comprising one or more solid monofunctional cyanoacrylate monomers and one or more (co)polymers.

### Background to the Invention

Pressure sensitive adhesives are viscoelastic materials that spread or flow on surfaces to which they are placed with little or no pressure, but when they are peeled they behave like cohesive solids in that they resist the force.

Typically pressure sensitive adhesive is relatively low strength in terms of the bond formed. Often an applied pressure sensitive adhesive can be removed by pulling it away from the substrate. While some pressure sensitive adhesives go on to form a more permanent bond over time typically hours or days they are usually removable with relatively low force within minutes of being applied.

International Patent Publication No. WO2010/069800 to Tesa Se et al. describes a pressure sensitive adhesive consisting of a homogeneous mixture of at least one natural rubber component and at least one polyacrylate component in order to achieve improved properties in cohesion, aging and also in weathering resistance.

European Patent No. EP2283100 B1 to Tesa Se discloses a self-adhesive mass comprising among others a mixture of a polymer blend of thermoplastic and/or non-thermoplastic elastomers with vinyl aromatic block copolymer and adhesive resin.

Notwithstanding the state of the art there remains a need for adhesive compositions that exhibit high initial tack, and which show improved bonding strength. Desirably, the composition will exhibit good adhesion to a wide variety of substrates, it will be easy and cheap to manufacture, it will be storage stable and it will exhibit a combination of high initial tack and strong bond strengths.

### Summary of the Invention

The present invention provides for curable compositions in which a cyanoacrylate monomer is co-formulated with a (co)polymer. The resultant compositions exhibit high initial tack, and good bond strengths.

In a first aspect, the present invention provides for a curable composition, comprising:

(a) at least one cyanoacrylate monomer selected from compounds of formula (I)

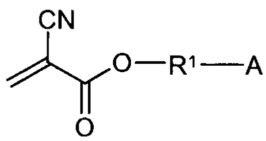

(I)

wherein $R^1$ is a divalent linking group comprising 1 to 10 carbon atoms, and A represents an $C_5$-$C_{50}$ aryl residue or a $C_2$-$C_{50}$ heteroaryl residue; and

(b) at least one (co)polymer.

As used herein, the term aryl residue refers to an aromatic carbocyclic structure which is monocyclic or polycyclic (unfused or fused). Similarly, the term heteroaryl refers to an aromatic heterocyclic structure having as ring members atoms of at least two different elements. The heteroaryl residue may be monocyclic or polycyclic (unfused or fused). The carbon atoms of the aryl or heteroaryl residue may optionally be substituted one or more times, for example, with at least one of a cyano group, a nitro group, a halogen, $C_1$-$C_{10}$ alkyl, a $C_1$-$C_{10}$ ether, a $C_1$-$C_{10}$ thioether, a $C_1$-$C_{10}$ ester, $C_1$-$C_{10}$ ketone, $C_1$-$C_{10}$ ketimine, $C_1$-$C_{10}$ sulfone, $C_1$-$C_{10}$ sulfoxide, a $C_1$-$C_{10}$ primary amide or a $C_1$-$C_{20}$ secondary amide.

Within the context of this specification the term (co)polymer refers to either a polymer derived from a single monomeric species or a polymer derived from two (or more) monomeric species.

Advantageously, the compositions of the present invention exhibit pressure sensitive adhesion properties at 23 °C. Subsequent cure of the compositions can be initiated as appropriate. For example, an external stimulus such as heat or radiation (e.g. UV cure) may be applied to induce cure of the composition when desired to do so.

As used herein, the term "pressure sensitive adhesion properties" refers to materials and formulations that are permanently tacky and adhere under finger pressure. More particularly said term is used for materials or formulations having a glass transition temperature ($T_g$) of less than 25 °C and a storage modulus G' of 3.3 x $10^5$ Pa or less at 23 °C,

wherein the glass transition temperature ($T_g$) is determined by Differential Scanning Calorimetry (DSC) and the storage modulus G' is determined by Dynamic Mechanical Analysis (DMA) at 1 Hz, and at 23 °C.

The term divalent linking group refers to a moiety which links the unsaturated oxygen of the ester functional group to the aryl residue.

With reference to the cyanoacrylate monomer of the article of the present invention the variable A may be $C_5$-$C_{50}$ aryl residue.

For example, the cyanoacrylate monomer may be selected from compounds of formula (II),

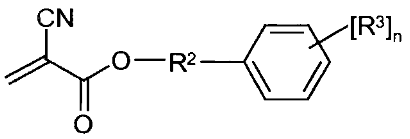

formula (II)

wherein n is 0 to 5, $R^2$ is a $C_{1-5}$ alkylene group, and each $R^3$, if present, is independently selected from $C_1$-$C_{10}$ alkyl, $C_1$-$C_{10}$ alkoxy, fluorine, chlorine, bromine, cyano and nitro.

As used herein, the term "$C_x$-$C_y$ alkyl" embraces $C_x$-$C_y$ unbranched alkyl, $C_x$-$C_y$ branched alkyl and combinations thereof. The term "$C_x$-$C_y$ alkylene group" should be construed as "$C_x$-$C_y$ alkyl".

The cyanoacrylate monomer may have a melting point at 1013.25 mbar of more than 25 °C.

With reference to the compounds of formula (II), n may be 0 to 2, $R^2$ may be a $C_{1-3}$ alkylene group, and each $R^3$, if present, is independently selected from $C_1$-$C_{10}$ alkyl, $C_1$-$C_{10}$ alkoxy, fluorine, chlorine, bromine, cyano and nitro. For example, n may be 0 to 2, $R^2$ may be a $C_{1-3}$ alkylene group, and each $R^3$, if present, may be independently selected from fluorine, chlorine, bromine, cyano and nitro. In another embodiment, n may be 0, and $R^2$ may be a $C_{1-5}$ alkylene group. For example, n may be 0, and $R^2$ may be a $C_{1-3}$ alkylene group

The cyanoacrylate monomer may be (2-phenylethyl) 2-cyanoacrylate, i.e. in formula (II) $R^2$ is $C_2H_4$, and n is 0.

The cyanoacrylate monomer of the general formula (I) may be present in an amount of at least 15 wt.%, based on the total weight of the composition. For example, the cyanoacrylate monomer may be present in an amount from 20 wt.% to 80 wt.%, based on the total weight of the curable composition.

Advantageously, the compositions of the present invention exhibit excellent shear strengths.

The (co)polymer of the composition of the present invention may be present in an amount from 20 wt.% to 85 wt.%, based on the total weight of the composition.

The (co)polymer may be selected from the group consisting of poly(meth)acrylates, polyvinyl ethers, natural rubbers, polyisoprenes, polybutadienes, polyisobutylenes, polychloroprenes, butadieneacrylonitrile polymers, thermoplastic elastomers, styrene-isoprenes, styreneisoprene-styrene block copolymers, ethylene-propylene-diene polymers, styrene-butadiene polymers, poly-alpha-olefins, silicones, ethylene-containing copolymers, ethylene vinyl acetates, and combinations thereof. Preferably, the (co)polymer may comprise poly(meth)acrylates and/or ethylene vinyl acetates.

The (co)polymer may have a glass transition temperature (Tg), as determined by Differential Scanning Calorimetry (DSC), of less than 30 °C.

The (co)polymer may be a (co)polymer having pressure sensitive adhesion properties at 23 °C.

The (co)polymer may be a (co)opolymer of (meth)acrylic acid, (meth)acrylic acid esters and optionally other comonomers.

The (co)polymer may have an acid number from about 0 to about 30. Preferably, the (co)polymer has an acid number below 15. The acid number is the weight in milligrams of KOH required to neutralize the pendant carboxylate groups in one gram of the (co)polymer. The method of determining the acid number of the (co)polymer is described in the experimental section, *vide infra.*

The (co)polymer may be an ethylene vinyl acetate copolymer. The ethylene vinyl acetate copolymer may have a vinyl acetate content of 50 wt.% to 98 wt.%, based on the total weight of the ethylene vinyl acetate copolymer.

The curable compositions of the present invention exhibit pressure sensitive adhesion properties at 23 °C. The curable compositions of the present invention may have a storage modulus G', measured with Dynamic Mechanic Analysis (DMA) at 1 Hz and 23 °C, of about 3.3 x $10^5$ Pa or less.

The curable compositions of the article of the present invention may return a tack value of at least 3 N in the standard loop tack test as measured by DIN EN 1719.

The curable compositions of the article of the present invention, may have a glass transition temperature (Tg) of less than 10 °C as determined by Differential Scanning Calorimetry (DSC). For example, the curable composition may have a glass transition temperature as determined by DSC ranging from -60 to +10 °C.

The curable composition of the present invention may have a 180° peel strength of 3 N/25mm to 50 N/25mm after 10 min as measured by DIN EN 1939 (Afera 5001) on steel substrate at 23 °C.

The curable composition of the present invention may have, in its uncured state, a modulus G' at room temperature of about 3.3 x $10^5$ Pa or less, measured with DMA at 1 Hz, and may return a tack value of at least 3 N, preferably of at least 5 N, in the standard loop tack test as measured by DIN EN 1719.

The curable composition of the present invention may have, in its uncured state, a modulus G' at room temperature of about 3.3 x $10^5$ Pa or less, measured with DMA at 1 Hz, and may have a glass transition temperature (Tg) of less than 10 °C, for example from -60 to +10 °C as determined by Differential Scanning Calorimetry (DSC).

The curable composition of the present invention may have, in its uncured state, a glass transition temperature (Tg) of less than 10 °C, for example from -60 to +10 °C as determined by Differential Scanning Calorimetry (DSC), and may return a tack value of at least 3 N, preferably of at least 5 N, in the standard loop tack test as measured by DIN EN 1719.

The curable composition of the present invention may have, in its uncured state, a modulus G' at room temperature of about 3.3 x $10^5$ Pa or less, measured with DMA at 1 Hz, a glass transition temperature (Tg) of less than 10 °C, for example from -60 to +10 °C as determined by Differential Scanning Calorimetry (DSC), and may return a tack value of at least 3 N, preferably of at least 5 N, in the standard loop tack test as measured by DIN EN 1719.

The curable composition of the present invention may comprise, in addition to the solid cyanoacrylate of formula (I), a (co)polymer matrix substance selected from the group consisting of poly(meth)acrylates, polyvinyl ethers, natural rubbers, polyisoprenes, polybutadienes, polyisobutylenes, polychloroprenes, butadieneacrylonitrile polymers, thermoplastic elastomers, styrene-isoprenes, styreneisoprene-styrene block copolymers, ethylene-propylene-diene polymers, styrene-butadiene polymers, poly-alpha-olefins, silicones, ethylene-containing copolymers, ethylene vinyl acetates, and combinations thereof. Preferably, the (co)polymer matrix substance may comprise poly(meth)acrylates and/or ethylene vinyl acetates.

With reference to the curable composition of the present invention, the composition may comprise, based on the total weight of the composition:

(a) from 15 to 80 wt.% of one or more cyanoacrylate monomers selected from compounds of formula (I);
(b) from 20 to 85 wt.% of one or more (co)polymers; and
(c) from 0 to 65 wt.% of one or more additives.

For example, the curable composition may comprise, based on the total weight of the composition:

(a) from 40 to 60 wt.% of one or more cyanoacrylate monomers selected from compounds of formula (I);
(b) from 40 to 60 wt.% of one or more (co)polymers; and
(c) from 0 to 20 wt.% of one or more additives.

The curable composition of the present invention may further comprise one or more additives selected from cyanoacrylate polymers, tackifiers, plasticizers, toughening agents, antioxidants, stabilizers, water absorbing agents and/or combinations thereof.

Examples of filler components include but are not limited to, for example, silicas, quartz, alumina, calcium, clays, talcs and other inorganic filler materials such as polycarbonates and other polymer powders, along with certain acrylate components.

Examples of stabiliser components which may be suitably used in the adhesive composition of the present invention include hydroquinone, pyrocatechol, resorcinol or derivatives thereof, phenols, sulfur dioxide, sulfuric acid, alkyl sulfonic acids, aromatic sulfonic acids, boranes and combinations thereof. For example, the stabiliser may be selected from methanesulfonic acid (MSA), $BF_3$, $SO_2$ and combinations thereof.

With reference to the curable composition of the present invention, the weight ratio of cyanoacrylate monomers of the formula (I) to (co)polymers in the composition may be from 1:8 to 8:1. Suitably, the weight ratio of cyanoacrylate monomers of the formula (I) to (co)polymers in the composition may be from 1:4 to 4:1.

The curable composition may comprise, based on the total weight of the composition:

(a) from 15 to 80 wt.% of one or more cyanoacrylate monomers selected from compounds of formula (I);
(b) from 20 to 85 wt.% of one or more (co)polymers, wherein said (co)polymer has pressure sensitive adhesion properties at 23 °C; and
(c) from 0 to 65 wt.% of one or more additives.

The curable composition may comprise, based on the total weight of the composition:

(a) from 15 to 80 wt % of (2-phenylethyl) 2-cyanoacrylate;
(b) from 20 to 85 wt% of one or more (co)polymers; and
(c) from 0 to 65 wt.% of one or more additives.

The curable composition may comprise, based on the total weight of the composition:

(a) from 15 to 80 wt % of (2-phenylethyl) 2-cyanoacrylate;
(b) from 20 to 85 wt% of one or more (co)polymers, wherein said (co)polymer has pressure sensitive adhesion properties at 23 °C; and
(c) from 0 to 65 wt.% of one or more additives.

The curable composition may comprise, based on the total weight of the composition:

(a) from 15 to 80 wt.% of one or more cyanoacrylate monomers selected from compounds of formula (I);
(b) from 20 to 85 wt.% of one or more (co)polymers of (meth)acrylic acid, (meth)acrylic acid esters and optionally other comonomers; and
(c) from 0 to 65 wt.% of one or more additives.

The curable composition may comprise, based on the total weight of the composition:

(a) from 15 to 80 wt.% of one or more cyanoacrylate monomers selected from compounds of formula (I);
(b) from 20 to 85 wt.% of one or more (co)polymers of (meth)acrylic acid, (meth)acrylic acid esters and optionally other comonomers, wherein said (co)polymer has pressure sensitive adhesion properties at 23 °C; and
(c) from 0 to 65 wt.% of one or more additives.

The curable composition may comprise, based on the total weight of the composition:

(a) from 15 to 80 wt % of one or more cyanoacrylate monomers selected from compounds of formula (I);
(b) from 20 to 85 wt% of one or more ethylene vinylacetate copolymers; and
(c) from 0 to 65 wt.% of one or more additives.

The curable composition may comprise, based on the total weight of the composition:

(a) from 15 to 80 wt % of (2-phenylethyl) 2-cyanoacrylate;
(b) from 20 to 85 wt% of one or more ethylene vinylacetate copolymers; and
(c) from 0 to 65 wt.% of one or more additives.

The curable composition may comprise, based on the total weight of the composition:

(a) from 15 to 80 wt % of (2-phenylethyl) 2-cyanoacrylate;
(b) from 20 to 85 wt% of one or more (co)polymers of (meth)acrylic acid, (meth)acrylic acid esters and optionally other comonomers; and
(c) from 0 to 65 wt.% of one or more additives.

The curable composition may comprise, based on the total weight of the composition:

(a) from 15 to 80 wt % of (2-phenylethyl) 2-cyanoacrylate;
(b) from 20 to 85 wt% of one or more (co)polymers of (meth)acrylic acid, (meth)acrylic acid esters and optionally other comonomers, wherein said (co)polymer has pressure sensitive adhesion properties at 23 °C; and
(c) from 0 to 65 wt.% of one or more additives.

Suitable poly(meth)acrylate (co)polymers include DuroTAK® 2123. Suitable ethylene vinylacetate coplymers include Levamelt® 900.
Suitable additives may be selected from cyanoacrylate polymers, tackifiers, plasticizers, toughening agents, antioxidants, stabilizers, water absorbing agents and/or combinations thereof.
Suitable tackifiers are known to persons skilled in the art. Sources of tackifiers can be found in standard publications on pressure sensitive adhesives, for example, the "Handbook of Pressure Sensitive Adhesive Technology" from Donata Satas (van Notstrand, New York, 1989).
The curable composition of the present invention may be a product selected from the group consisting of an adhesive, a sealant and a coating.
The curable composition of the present invention may exhibit pressure sensitive adhesion properties at 23 °C such that they can initially be tacked to or attached to a target surface. Desirably, other stimuli are used to promote cure

of the composition, for example heat and/or radiation (e.g. UV radiation). Where radiation is utilised to initiate or promote further cure masking may be employed to selectively induce cure.

In a further aspect, the present invention provides for a method of adhering components together, said method comprising:

(i) mating a first component having a curable composition according to the present invention applied thereto with a second component; and

(ii) curing the composition between the components to be adhered together.

Compositions of the present invention may exhibit pressure sensitive adhesion properties at 23 °C, thus the composition of the present invention may simply be tacked to the first component. Advantageously, this may prevent spilling, or escape of the curable composition from the bonding area. Conditions sufficient to cure the composition of the present invention may include heat and/or radiation (e.g., UV radiation).

The curable compositions of the present invention may find utility in bonding, sealing or coating a plurality of substrates and or surfaces, including, but not limited to metals, metal alloys, glasses, enamels, wood, natural or synthetic fabrics and fibres, leather, stone, ceramic, plastics, paper or card, composite materials, and living tissues and organs.

The curable compositions of the present invention may more specifically find industrial applicability across a wide range of applications such as, but not limited to lamination, bookbinding, shoe assembly, assembly of parts of motor vehicles, of air conditioning systems, components of an electric or electronic device or other consumer durables, components used in building industries [for example, in insulation (thermal and acoustic)], packaging, die attachment applications, wound closure, surgical closures, medical device applications and all sorts of labelling. The components may be the ends of longitudinal materials that are adhered together, for example splicing two material rolls together.

The invention also relates to the cured product of the curable composition of the present invention. Accordingly, in a further aspect, the present invention provides a method for producing the cured product of the curable composition of the present invention, the method comprising the steps of:

(i) providing the curable composition according to the present invention, and

(ii) exposing the curable composition to heat and/or radiation to obtain the cured product of the curable composition.

All numerical ranges and ratios disclosed herein are inclusive of the indicated end points.

Where suitable, it will be appreciated that all optional and/or preferred features of one embodiment of the invention may be combined with optional and/or preferred features of another/other embodiment(s) of the invention.

## Examples of the Invention

It should be readily apparent to one of ordinary skill in the art that the examples disclosed herein below represent generalised examples only, and that other arrangements and methods capable of reproducing the invention are possible and are embraced by the present invention.

Examples of some formulations falling within the compositions of the present invention are illustrated below:

### Materials

Levamelt 900 is an ethylene vinylacetate copolymer with a vinylacetate content of about 90 wt %, commercially available from Lanxess AG, Leverkusen, Germany.

Durotak 2123 is a solution of a (meth)acrylic acid ester copolymer in ethyl acetate, commercially available from Henkel AG & Co. KGaA, Düsseldorf, Germany

Neopentyl 2-cyanoacrylate (NCA) is a solid cyanoacrylate (melting point 41°C) and can be synthesized according to WO2010/023229.

(2-Phenylethyl) 2-cyanoacrylate (PheCA) is a solid cyanoacrylate (melting point 30-32°C) and can be synthesized utilising the Knoevenagel method by reacting 2-Phenylcyanacetate, Formaldehyde and a catalyst in a solvent, followed by a cracking process. Other suitable syntheses can be found in Sato, Mitsuyoshi, Okuyama and Toshio, *Jpn. Kokai Tokkyo Koho* (1994), and JP 06192202A.

**Composition 1 (PheCA + Levamelt 900)**

| | |
|---|---|
| Cutable formulation: | 25 wt % PheCA, 25 wt % Levamelt 900, 49.957 wt.% ethyl acetate, 0.04 wt.% hydrochinone, 0.003% camphor-10-sulfonic acid. |
| Curing conditions: | 1 hour at 65°C plus 24 hours at 23°C. |

**Composition 2 (PheCA + Durotak 2123)**

Curable formulation: 35 wt % PheCA, 15 wt % Durotak 2123 (polymer), 49.957 wt.% ethyl acetate, 0.04 wt.% hydrochinone, 0.003 wt.% camphor-10-sulfonic acid.

Curing conditions: 1 hour at 65°C plus 24 hours at 23°C.

**Comparative Composition 1 (NCA + Levamelt 900)**

Curable formulation: 25 wt % NCA, 25 wt % Levamelt 900, 49,957 % Ethyl acetate, 0.04% Hydrochinone, 0.003% Camphor-10-sulfonic acid.

Curing conditions: 1 hour at 65°C plus 24 hours at 23°C.

**Comparative Composition 2 (Durotak 2123)**

Curable formulation: Durotak® 2123 (68.7 wt.% Durotak 2123 polymer in 31.3 wt.% ethyl acetate)

Curing conditions: 1 hour at 65°C plus 24 hours at 23°C.

The properties of the compositions were evaluated by using the following test methods.

**Test methods**

**Loop tack**

The loop tack is determined in accordance with DIN EN 1719: The composition is placed on an aluminium strip of width of about 25mm and a length of about 300 mm. The strips are immediately measured in a "Zwick" tensile testing machine Z010 with a velocity of 100 mm/min.

To determine the loop tack after curing a specimen is prepared as described above. Before the specimen is placed in a "Zwick" tensile testing machine Z010 the curable composition is cured under the described conditions, wherein the loop tack is determined as described above.

**Shear resistance**

The composition was laminated on a polyester film and cut into strips with a width of about 25mm and a length of about 50mm. The strip is put on a steel plate to cover an area of about 25 mm x 25 mm at the edge of the steel plate. Immediately after preparation the steel plate is positioned vertically in a suitable device and stressed with loads between 1 N to 160 N. The shear value is the maximum stress (in Newton) at which the strip still sticks to the plate after 4 hours.

To determine the shear resistance after curing a specimen is prepared as described above. Before the shear resistance is measured as described above, the composition is cured under the described conditions.

**Lap shear tests**

Grit blasted mild steel (GBMS) panels: The GBMS panels consist of grit blasted mild steel. The grit blasting must be done within 24h of the test. Blasting medium: Corundum, diameter 0.21-0.3 mm, blasting pressure 3 bar. The composition is applied to GBMS steel panels (25 mm width) to cover an area of 25 mm x 12.5 mm (312.5 $mm^2$) at the edge of the first steel panel. A second steel panel is put on the first panel in such a way that a complete overlap of the covered area is achieved. Two clamps (load each of them 45-90N) are used to press the steel panels together. The resulting specimen is then stored under defined temperature and

time conditions.

The lap shear strength was measured using a "Zwick" tensile testing machine Z010. Velocity: 2 mm/min; initial load: 5 N. The resulting value is the maximum force before specimen breaks.

To determine the lap shear strength after curing a specimen is prepared as described above. Before the lap shear strength is measured as described above, the composition is cured under the described conditions

### Differential Scanning Calorimetry (DSC)

For the DSC measurements a NETZSCH DSC204F1 instrument is used, wherein the measurement conditions are the following: Scanning temperature range from -80°C to 200°C with 10 K/ min, sample weight: 5 mg.

### Dynamic Mechanical Analysis (DMA)

For the DMA measurements a METTLER TOLEDO DMA/SDTA861e instrument is used, wherein the measurement conditions are the following: harmonic shear load with 1 Hz, max. force 1.5 N, max. distance 10 μm, Scanning temperature range from -150°C to 200°C. The storage modulus G' was determined from the DMA results.

### Example 1

Composition 1 exhibits a high initial tackiness and shows good pressure sensitive adhesion properties at 23 °C. The composition can be fully cured by exposing said composition to a temperature of 65 °C for 1 hour followed by a temperature of 23 °C for 24 hours. The glass transition temperature ($T_g$) of the composition is -40°C whereas the glass transition temperature ($T_g$) of the cured composition is 15 °C. For the composition a storage modulus G' of $3.10^3$ Pa was observed.

In Table 1 several material properties of Composition 1 are given.

**Table 1**

| | Substrate | Uncured state | Cured state |
|---|---|---|---|
| **Loop-Tack** | Steel | 7N | none |
| **Shear resistance** | Steel | <10 N | > 160N |
| **Lap Shear strength** | GBMS | < 15N/312.5mm$^2$<br>< 0.05 MPas | 1966 N/312.5 mm$^2$<br>6.3 MPas |

The importance of the curing process is further shown in Table 2, where different curing conditions were used. High shear strengths were only observed for cases where the samples where exposed to conditions which could cause the curing of the curable composition.

**Table 2**

| Curing conditions | F-max [N/312,5mm$^2$] | MPas |
|---|---|---|
| 23°C/30min | < 30 | < 0.1 |
| 23°C/1 hour | 150 | 0.48 |
| 23°C/3 hours | 590 | 1.89 |
| 23°C/10 hours | 930 | 2.98 |
| 23°C/24 hours | 1550 | 4.96 |
| 23°C / 72 hours | 1510 | 4.83 |
| 65°C / 5 minutes | < 30 | < 0.1 |
| 65°C / 30 minutes | 438 | 1 |
| 65°C / 1hour | 935 | 3 |
| 65°C / 1 hour + 24h RT post curing | 2281 | 7.3 |

### Example 2

Composition 2 exhibits a very high initial tackiness and shows very good pressure sensitive adhesion properties at 23 °C. The composition can be fully cured by exposing said it to a temperature of 65 °C for 1 hour followed by a temperature of 23 °C for 24 hours.

In Table 3 several material properties of Composition 2 are given.

**Table 3**

| | Substrate | Uncured state | Cured state |
|---|---|---|---|
| **Loop-Tack** | Steel | 9 N | none |
| **Lap Shear strength** | GBMS | < 15 N/312.5 $mm^2$<br>< 0.05 MPas | 525 N / 312.5 $mm^2$<br>1.68 MPas |

**Example 3 (comparative example)**

Curing of the curable composition at a temperature of 65 °C for 1 hour followed by a temperature of 23 °C for 24 hours does not sufficiently increase the lap shear strength on GBMS, which means that this composition could be unsuitable for a variety of structural bonding applications.

In Table 4 several material properties of Comparative Composition 1 are given.

**Table 4**

| | Substrate | Uncured status | Cured status |
|---|---|---|---|
| **Loop-Tack** | Steel | 7N | 8 N |
| **Shear resistance** | Steel | <10N | < 20 |
| **Lap Shear strength** | GBMS | < 15 N / 312.5 $mm^2$<br>< 0.05 MPas | 80 N / 312.5 $mm^2$<br>0.25 MPas |

**Example 4 (comparative example)**

Comparative Composition 2 exhibits a high initial tackiness and shows pressure sensitive adhesion properties at 23 °C. However, exposing the composition to different conditions (see Table 5) does not lead to a significant increase of the bonding strength on GBMS, which means that this composition is unsuitable for all structural bonding applications.

**Table 5**

| Temperature/Time | F-max [N/312,5$mm^2$] | MPas |
|---|---|---|
| 23°C/30min | < 15 | < 0,05 |
| 23°C/1 hour | 30 | 0.1 |
| 23°C/ 3 hours | 50 | 0.16 |
| 23°C/ 10 hours | 50 | 0.16 |
| 23°C/ 24 hours | 48 | 0.15 |

**Procedure for Determining (Co)Polymer Acid Number**

Check if sample is at room temperature by replacing the lid of the sample container by a lid with thermometer. Determine the temperature. If the temperature is between 20 and 30 °C, the analyses can start in the sequence specified. If the temperature is not within the above range, place the sample in a water bath at 25 °C and check the temperature regularly until it reaches a value between 20 and 30 °C. Some (co)polymers will contain volatile compounds, so it is recommended to start with the analyses of the most critical parameters.

<u>Method:</u>

1. Weigh in a sample bottle of 250 cc X g of the (co)polymer.
2. Add acetone. Prior to use, neutralize the acetone with 0.05 N KOH, using phenolphthalein.
3. Shake the sample bottle until the (co)polymer is dissolved.

4. Cool the sample bottle (0 - 5 °C) and titrate with 0.05 N KOH from clear to light pink. The change of colour has to stay for 30 seconds.
5. Where the (co)polymer has a low acid number (1.0 mg KOH/g dry resin max), a small 10 ml burette should be used.

The acid number of the (co)polymer is determined according to the following equation:

$$\text{acid number ( in mg KOH/g dry resin )} = \frac{(\text{ml of KOH}) \times (\text{N of KOH}) \times 56 \times 100}{(\text{g sample}) \times (\text{Total Solids in Sample})}$$

Total solids in sample refers to the % dry polymer in the (co)polymer. Normally, (co)polmers are solvent based. The typical value of total solids in the sample is 30 - 60%.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A curable composition, comprising:

(a) at least one cyanoacrylate monomer selected from compounds of formula (I)

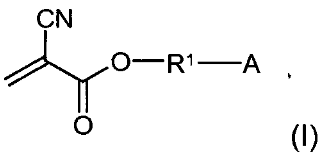

(I)

wherein $R^1$ is a divalent linking group comprising 1 to 10 carbon atoms, and A represents an $C_5$-$C_{50}$ aryl residue or a $C_2$-$C_{50}$ heteroaryl residue; and
(b) at least one (co)polymer.

2. The curable composition of claim 1, wherein the cyanoacrylate monomer is selected from compounds of formula (II),

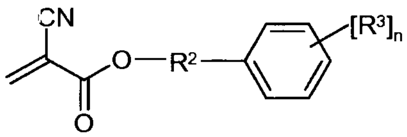

formula (II)

wherein n is 0 to 5, $R^2$ is a $C_{1-5}$ alkylene group, and each $R^3$, if present, is independently selected from $C_1$-$C_{10}$ alkyl, $C_1$-$C_{10}$ alkoxy, fluorine, chlorine, bromine, cyano and nitro.

3. The curable composition of claim 1 or 2, wherein the cyanoacrylate monomer has a melting point at 1013.25 mbar of more than 25 °C.

4. The curable composition of any preceding claim, wherein the cyanoacrylate monomer is (2-phenylethyl) 2-cyanoacrylate.

5. The curable composition of any preceding claim, wherein the cyanoacrylate monomer is present in an amount of at least 15 wt.%, based on the total weight of the curable composition, preferably the cyanoacrylate monomer is present in an amount from 20 wt.% to 80 wt.%, based on the total weight of the curable composition.

**6.** The curable composition of any preceding claim, wherein the (co)polymer is selected from poly(meth)acrylate (co)polymers, polyvinyl ethers, natural rubbers, polyisoprenes, polybutadienes, polyisobutylenes, polychloroprenes; butadiene-acrylonitrile polymers, thermoplastic elastomers, styrene-isoprene copolymers, styrene-isoprene-styrene block copolymers, ethylene-propylene-diene polymers, styrene-butadiene polymers, poly-alpha-olefins, silicones, ethylene vinyl acetate copolymers and/or combinations thereof.

**7.** The curable composition of any one of claims 1 to 5, wherein the (co)polymer is an ethylene vinyl acetate copolymer, preferably the ethylene vinyl acetate copolymer has a vinyl acetate content of 50 wt.% to 98 wt.%, based on the total weight of the ethylene vinyl acetate copolymer.

**8.** The curable composition of any preceding claim, wherein the (co)poylmer is present in an amount from 20 wt.% to 80 wt.%, based on the total weight of the composition.

**9.** The curable composition of any preceding claim, wherein the weight ratio of the total amount of cyanoacrylate monomers to the total amount of (co)polymers in the curable composition is from 1:8 to 8:1.

**10.** The curable composition of any preceding claim, wherein the composition further comprises one or more additives selected from cyanoacrylate polymers, tackifiers, plasticizers, toughening agents, antioxidants, stabilizers, water-absorbing agents and/or combinations thereof.

**11.** The curable composition according to any preceding claim, wherein the curable composition is an adhesive, sealant or coating.

**12.** The cured product of the curable composition of any one of claims 1 to 10.

**13.** A method for producing the cured product of claim 12, comprising the following steps:

(i) providing the curable composition according to any one of claims 1 to 10, and
(ii) exposing the curable composition to heat and/or radiation to obtain the cured product of the curable composition.

**14.** A method of adhering components together, said method comprising:

(i) mating a first component having a curable composition according to any one of claims 1 to 10 applied thereto with a second component; and
(ii) curing the composition between the components to be adhered together.

**15.** The method of claim 14, wherein the composition cures upon exposure to heat and/or radiation.

**Patentansprüche**

**1.** Härtbare Zusammensetzung, umfassend:

(a) mindestens ein Cyanacrylat-Monomer, ausgewählt aus Verbindungen nach Formel (I)

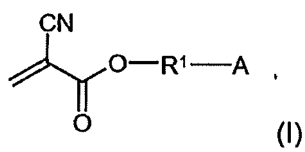

(I)

wobei $R^1$ eine bivalente VerKnüptungsgruppe ist, die 1 bis 10 Kohlenstoffatome umfasst, und A für einen $C_5$-$C_{50}$-Arylrest oder einen $C_2$-$C_{50}$-Heteroarylrest steht; und
(b) mindestens ein (Co)polymer.

**2.** Härtbare Zusammensetzung nach Anspruch 1, wobei das Cyanacrylat-Monomer aus Verbindungen nach Formel (II) ausgewählt ist

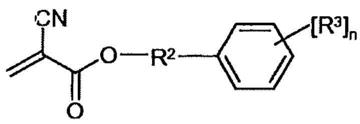

Formel (II)

wobei n 0 bis 5 beträgt, $R^2$ eine $C_{1-5}$-Alkylengruppe ist und jedes $R^3$, falls vorhanden, unabhängig ausgewählt ist aus $C_1$-$C_{10}$-Alkyl, $C_1$-$C_{10}$-Alkoxy, Fluor, Chlor, Brom, Cyano und Nitro.

3. Härtbare Zusammensetzung nach Anspruch 1 oder 2, wobei das Cyanacrylat-Monomer einen Schmelzpunkt bei 1013,25 mbar von mehr als 25 °C hat.

4. Härtbare Zusammensetzung nach einem der vorhergehenden Ansprüche, wobei das Cyanacrylat-Monomer (2-Phenylethyl-)2-Cyanacrylat ist.

5. Härtbare Zusammensetzung nach einem der vorhergehenden Ansprüche, wobei das Cyanacrylat-Monomer in einer Menge von mindestens 15 Gew.-%, auf der Grundlage des Gesamtgewichts der härtbaren Zusammensetzung, vorhanden ist, wobei das Cyanacrylat-Monomer vorzugsweise in einer Menge von 20 Gew.-% bis 80 Gew.-%, auf der Grundlage des Gesamtgewichts der härtbaren Zusammensetzung, vorhanden ist.

6. Härtbare Zusammensetzung nach einem der vorhergehenden Ansprüche, wobei das (Co)polymer ausgewählt ist aus Poly(meth)acrylat-(Co)polymeren, Polyvinylethern, Naturkautschuken, Polyisoprenen, Polybutadienen, Polyisobutylenen, Polychloroprenen; Butadien-Acrylonitril-Polymeren, thermoplastischen Elastomeren, Styrol-Isopren-Copolymeren, Styrol-Isopren-Styrol-Block-Copolymeren, Ethylen-Propylen-Dien-Polymeren, Styrol-Butadien-Polymeren, Poly-alpha-Olefinen, Silikonen, Ethylenvinylacetat-Copolymeren und/oder Kombinationen davon.

7. Härtbare Zusammensetzung nach einem der Ansprüche 1 bis 5, wobei das (Co)polymer ein Ethylenvinylacetat-Copolymer ist, wobei das Ethylenvinylacetat-Copolymer vorzugsweise einen Vinylacetat-Gehalt von 50 Gew.-% bis 98 Gew.-%, auf der Grundlage des Gesamtgewichts des Ethylenvinylacetat-Copolymers, hat.

8. Härtbare Zusammensetzung nach einem der vorhergehenden Ansprüche, wobei das (Co)polymer in einer Menge von 20 Gew.-% bis 80 Gew.-%, auf der Grundlage des Gesamtgewichts der Zusammensetzung, vorhanden ist.

9. Härtbare Zusammensetzung nach einem der vorhergehenden Ansprüche, wobei das Gewichtsverhältnis zwischen der Gesamtmenge des Cyanacrylat-Monomers und der Gesamtmenge des (Co)polymers in der härtbaren Zusammensetzung 1:8 bis 8:1 beträgt.

10. Härtbare Zusammensetzung nach einem der vorhergehenden Ansprüche, wobei die Zusammensetzung des Weiteren einen oder mehrere Additive umfasst, ausgewählt aus Cyanacrylat-Polymeren, Klebrigmachern, Weichmachern, Schlagzähigkeitsverbesserern, Antioxidantien, Stabilisatoren, Wasserabsorptionsmitteln und/oder Kombinationen davon.

11. Härtbare Zusammensetzung nach einem der vorhergehenden Ansprüche, wobei die härtbare Zusammensetzung ein Klebstoff, ein Dichtmittel oder eine Beschichtung ist.

12. Ausgehärtetes Produkt der härtbaren Zusammensetzung nach einem der Ansprüche 1 bis 10.

13. Verfahren zum Herstellen des ausgehärteten Produkts nach Anspruch 12, umfassend die folgenden Schritte:

(i) Bereitstellen der härtbaren Zusammensetzung nach einem der Ansprüche 1 bis 10; und
(ii) Freilegen der härtbaren Zusammensetzung unter Wärme und/oder Strahlung, um das ausgehärtete Produkt der härtbaren Zusammensetzung zu erhalten.

14. Verfahren zum Kleben von Komponenten aneinander, wobei das Verfahren Folgendes umfasst:

(i) Zusammenfügen einer ersten Komponente, auf die eine härtbare Zusammensetzung nach einem der Ansprüche 1 bis 10 aufgebracht ist, mit einer zweiten Komponente; und
(ii) Aushärten der Zusammensetzung zwischen den aneinander zu klebenden Komponenten.

**15.** Verfahren nach Anspruch 14, wobei die Zusammensetzung beim Freilegen unter Wärme und/oder Strahlung aushärtet.

## Revendications

**1.** Composition durcissable, comprenant :

(a) au moins un monomère cyanoacrylate choisi parmi les composés de formule (I)

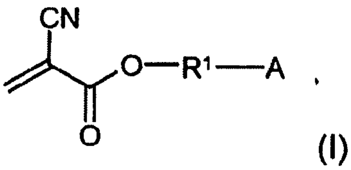

(I)

dans laquelle $R^1$ est un groupe de liaison divalent comprenant de 1 à 10 atomes de carbone, et A représente un résidu aryle en $C_5$ à $C_{50}$ ou un résidu hétéroaryle en $C_2$ à $C_{50}$ ; et
(b) au moins un (co)polymère.

**2.** Composition durcissable selon la revendication 1, dans laquelle le monomère cyanoacrylate est choisi parmi les composés de formule (II),

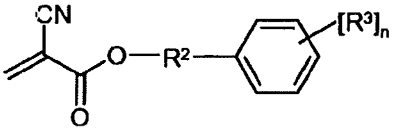

formule (II)

dans laquelle n est compris entre 0 et 5, $R^2$ est un groupe alkylène en $C_1$ à $C_5$, et chaque $R^3$, lorsqu'il est présent, est choisi indépendamment parmi un alkyle en $C_1$ à $C_{10}$, alcoxy en $C_1$ à $C_{10}$, fluor, chlore, brome, cyano et nitro.

**3.** Composition durcissable selon la revendication 1 ou 2, dans laquelle le monomère cyanoacrylate a un point de fusion à 1013,25 mbar de plus de 25°C.

**4.** Composition durcissable selon l'une des revendications précédentes, dans laquelle le monomère cyanoacrylate est le (2-phényléthyl)2-cyanoacrylate.

**5.** Composition durcissable selon l'une quelconque des revendications précédentes, dans laquelle le monomère cyanoacrylate est présent dans une quantité d'au moins 15% en poids, sur la base du poids total de la composition durcissable, de préférence le monomère cyanoacrylate est présent dans une quantité de 20% en poids à 80% en poids, sur la base du poids total de la composition durcissable.

**6.** Composition durcissable selon l'une quelconque des revendications précédentes, dans laquelle le (co)polymère est choisi parmi les (co)polymères poly(méth)acrylate, les éthers de polyvinyle, les caoutchoucs naturels, les polyisoprènes, les polybutadiènes, les polyisobutylènes, les polychloroprènes, les polymères butadiène-acrylonitrile, les élastomères thermoplastiques, les copolymères styrène-isoprène, les copolymères à blocs styrène-isoprène-styrène, les polymères éthylène-propylène-diène, les polymères styrène-butadiène, les polyalphaoléfines, les silicones, les copolymères éthylène-acétate de vinyle et/ou leurs combinaisons.

**7.** Composition durcissable selon l'une quelconque des revendications 1 à 5, dans laquelle le (co)polymère est un copolymère éthylène-acétate de vinyle, de préférence le copolymère éthylène-acétate de vinyle a une teneur en acétate de vinyle de 50% en poids à 98% en poids, sur la base du poids total du copolymère éthylène-acétate de vinyle.

**8.** Composition durcissable selon l'une quelconque des revendications précédentes, dans laquelle le (co)poylmer est

présent dans une quantité de 20% en poids à 80% en poids, sur la base du poids total de la composition.

**9.** Composition durcissable selon l'une quelconque des revendications précédentes, dans laquelle le rapport en poids de la quantité totale de monomères cyanoacrylate sur la quantité totale de (co)polymères dans la composition durcissable est de 1:8 à 8:1.

**10.** Composition durcissable selon l'une quelconque des revendications précédentes, dans laquelle la composition comprend en outre un ou plusieurs additifs choisis parmi les polymères cyanoacrylate, les agents d'adhésivité, les plastifiants, les agents de ténacité, les antioxydants, les stabilisants, les agents absorbant l'eau et/ou leurs combinaisons.

**11.** Composition durcissable selon l'une quelconque des revendications précédentes, dans laquelle la composition durcissable est un adhésif, un agent d'étanchéité ou un revêtement.

**12.** Produit durci de la composition durcissable selon l'une quelconque des revendications 1 à 10.

**13.** Procédé de production d'un produit durci selon la revendication 12, comprenant les étapes suivantes consistant à :

(i) produire la composition durcissable selon l'une quelconque des revendications 1 à 10, et
(ii) exposer la composition durcissable à la chaleur et/ou à un rayonnement pour obtenir le produit durci de la composition durcissable.

**14.** Procédé consistant à faire adhérer ensemble les composants, ledit procédé comprenant les étapes consistant à :

(i) accoupler un premier composant, sur lequel est appliquée une composition durcissable selon l'une quelconque des revendications 1 à 10, à un second composant ; et
(ii) faire durcir la composition entre les composants pour les coller ensemble.

**15.** Procédé selon la revendication 14, dans laquelle la composition durcit lorsqu'elle est exposée à la chaleur et/ou au rayonnement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010069800 A, Tesa Se
- EP 2283100 B1, Tesa Se
- WO 2010023229 A
- JP 06192202 A


### Non-patent literature cited in the description


- **DONATA SATAS.** Handbook of Pressure Sensitive Adhesive Technology. 1989